**Europäisches Patentamt**

**European Patent Office**

**Office européen des brevets**

(11) Veröffentlichungsnummer : **0 315 659 B1**

(12) **EUROPÄISCHE PATENTSCHRIFT**

(45) Veröffentlichungstag der Patentschrift :
**04.12.91 Patentblatt 91/49**

(51) Int. Cl.$^5$ : **B09B 3/00**

(21) Anmeldenummer : **88904478.0**

(22) Anmeldetag : **27.05.88**

(86) Internationale Anmeldenummer :
**PCT/DE88/00310**

(87) Internationale Veröffentlichungsnummer :
**WO 88/09228 01.12.88 Gazette 88/26**

(54) VERFAHREN ZUR SANIERUNG VON GEBÄUDEN DURCH UMWELTFREUNDLICHES
DEPONIEFÄHIGMACHEN VON GESUNDHEITSSCHÄDLICHEN, STAUBENDEN FESTSTOFFEN.

(30) Priorität : **27.05.87 DE 3718000**

(43) Veröffentlichungstag der Anmeldung :
**17.05.89 Patentblatt 89/20**

(45) Bekanntmachung des Hinweises auf die
Patenterteilung :
**04.12.91 Patentblatt 91/49**

(84) Benannte Vertragsstaaten :
**AT BE CH DE FR GB IT LI LU NL SE**

(56) Entgegenhaltungen :
**EP-A- 0 107 269**

(56) Entgegenhaltungen :
**EP-A- 0 178 091**
**WO-A-84/01910**
**FR-A- 2 582 545**
**US-A- 4 411 390**

(73) Patentinhaber : **Knoben, Jakob**
**Uhlandstrasse 38**
**W-5210 Troisdorf-Sieglar (DE)**

(72) Erfinder : **Knoben, Jakob**
**Uhlandstrasse 38**
**W-5210 Troisdorf-Sieglar (DE)**

(74) Vertreter : **Steffens, Joachim, Dr.**
**Steubstrasse 10**
**W-8032 München-Gräfelfing (DE)**

EP 0 315 659 B1

## Beschreibung

Die vorliegende Erfindung betrifft ein Verfahren und eine Vorrichtung zur Sanierung von Gebäuden durch umweltfreundliches Deponiefähigmachen von gesundheitsschädlichen, staubigen Feststoffen, insbesondere von sämtlichen im Baugewerbe eingesetzten alten Isoliermaterialien, Spritzputzen und anderen Beschichtungen auf Basis von Asbest-, Glas-, Stein- und/oder anderen Mineralfasern sowie Asbestzementwaren durch Vermischen mit einem erhärtenden Bindemittel, entprechend den Oberbegriffen des Ansprüche 1, 5 und 11.

Die gesundheitsschädigenden Eigenschaften von Asbestfasern sind bekannt und führten zum Verbot des Einsatzes von Asbestfasern auf vielen Gebieten, unter anderem im Baugewerbe. Es ist darüber hinaus zu erwarten, daß bald ähnliche Bestimmungen für andere Mineralfasern erlassen werden.

Eine besondere Bedeutung kommt daher jetzt der Entsorgung von im Baugewerbe früher eingesetzten alten Isoliermaterialien, Spritzputzen und anderen Beschichtungen auf Basis von Asbestfasern sowie den Asbestzementwaren zu. Die Asbestfasern fanden im Baugewerbe, aber auch in der chemischen Industrie Anwendung als Feuerschutz und zur thermischen Isolation von Rohren, Wänden und Decken. Außerdem dienten sie dabei der Schmutzwasseradsorption. Die Wände und Decken wurden zu diesem Zweck mit Schichten aus Spritzasbest oder Asbestspritzputzen versehen, Außerdem wurden Asbestfasern zur Herstellung einer ganzen Reihe von Asbestzementwaren eingesetzt, beispielsweise für Welldächer oder Fassadenverkleidungen zum Schutz gegen Witterungseinflüsse.

Diese alten Asbestrohrisolierungen, die Wand- und Decken-Asbestbeschichtungen, sowie die Asbestzementwaren müssen in vielen Fällen entfernt und auf Deponien abgelagert werden. Zu diesem Zweck ist es vorgeschrieben, diese alten Asbestmaterialien nach ihrer Entfernung vom Einsatzort und nach erfolgter Zerkleinerung in einem erhärtenden Bindemittel einzubetten, um ein eventuelles späteres Freisetzen von kleinsten Asbestfasern zu verhindern.

Aus der PCT-Anmeldung WO 84/01910 ist bereits ein Verfahren und eine Vorrichtung zur Durchführung dieses Verfahrens bekannt, bei dem Asbestmaterialien mit Raumluft vom Entstehungsort mittels Vakuum in einen Behälter transportiert werden, in welchem das Asbestmaterial von der Luft getrennt wird, die dann über Filtereinrichtungen in die Atmosphäre gelangt. Die in dem Behälter abgeschiedenen Feststoffe gelangen über Fördereinrichtungen in eine Mischeinrichtung, in der sie mit einem Bindemittel versehen und anschließend ausgetragen werden. Das Bindemittel kann entweder ein Zement-Wasser-Gemisch oder ein reaktives Kunstharz sein. Das erhaltene erhärtete Produkt ist dann deponiefähig.

Als besonders nachteilig hat sich bei diesem Verfahren aber immer noch die Tatsache erwiesen, daß sowohl bei der Entfernung der alten Asbestmaterialien von ihren Einsatzorten, als auch bei deren Zerkleinerung eine sehr starke und gefährliche Staubentwicklung auftritt.

Aufgabe der vorliegenden Erfindung ist es daher, ein Verfahren mit entsprechenden Vorrichtungen zur Durchführung des Verfahrens zur Verfügung zu stellen, mit dem es möglich ist, die gesundheitsschädlichen staubenden Feststoffe, insbesondere die Abestmaterialien, von ihren Einsatzorten zu entfernen und deponiefähig zu machen, ohne daß dabei der bei der Entfernung, Zerkleinerung und Mischung mit Bindemitteln entstehende Staub die Arbeiter, die sowieso schon mit Staubmasken und Sicherheitsanzügen arbeiten müssen, nicht zu stark beeinträchtigt und der Staub nicht nach außen gelangt und damit nicht die Umwelt gefährdet bzw. gesundheitsschädigend verschmutzt.

Gelöst wird diese Aufgabe gemäß der vorliegenden Erfindung durch ein Verfahren, das dadurch gekennzeichnet ist, daß man

(a) die mechanisch von ihrem Einsatzort entfernten gesundheitsschädlichen, staubenden Feststoffe durch eine mit Einfülltrichter versehene Zerkleinerungseinrichtung in eine Saugleitung einbringt, mittels der die zerkleinerten gesundheitsschädlichen, staubenden Feststoffe zu einer außerhalb des Gebäudes befindlichen Vorrichtung gesaugt und dort mit Bindemitteln gemischt werden, wobei die Ansaugluft vor dem Austritt in die Atmosphäre so gefiltert wird, daß sie die Vorrichtung frei von Schadstoffen verläßt, und

(b) die in den zu sanierenden Räumen befindliche staubige Luft über eine mit Filtern versehene Luft-Absaugvorrichtung so absaugt, daß kein Staub durch Tür- oder Fensterritzen nach außen gelangen kann.

Als Bindemittel wird normalerweise ein Zementmörtel eingesetzt. Gemäß einer bevorzugten Ausführungsform verwendet man jedoch als Bindemittel ein reaktives Kunstharz, das nach der Aushärtung ein mit den Fasern gefülltes Reaktionsprodukt ergibt, das bei mechanischen Einflüssen nicht staubt und unter den Deponiebedingungen hydrolysebeständig ist.

Als reaktives Kunstharz wird vorzugsweise ein Epoxidharz mit entsprechender Härterkomponente eingesetzt. Das mit dem ausgehärteten Harz gebundene Asbestmaterial sollte vorzugsweise klebrig oder elastisch sein. Auf jeden Fall darf es nicht so spröde sein, daß es bei mechanischen Einflüssen staubt.

Der Bindemittelanteil schwankt im Verhältnis zum Asbestfasermaterialanteil in breiten Grenzen und richtet sich ganz danach, was für ein Asbestfasern enthaltendes Altmaterial gebunden werden soll. In vielen Fällen kommen auf 80 Gew.-Teile Asbestfasermaterial 15 bis 45 Gew.-Teile, vorzugsweise 20 bis 10 Gew.-Teile Epoxidharz.

Zur Durchführung des Verfahrens dient eine spezielle Mischvorrichtung und eine Luft-Absaugvorrichtung.

Die Mischvorrichtung ist gekennzeichnet durch ein mit Hilfe von Filtern abgeschlossenes Saug- und Mischsystem, das im wesentlichen besteht aus

(a) einer mit einem Einfülltrichter und gegebenenfalls einer Zerkleinerungseinrichtung versehenen Feststoff-Ansaugleitung,

(b) einem nach unten konisch gestalteten Sammelbehälter, in dem die Feststoff-Ansaugleitung endet,

(c) einem mit Schlauchfiltereinheiten versehenen Saugaufsatz, der sich auf dem Sammelbehälter befindet, wobei der Saugaufsatz einerseits über eine Luft-Ansaugleitung mit einer Unterdruck erzeugenden Vakuumpumpe, die mit einer als Schalldämpfer wirkenden Abluft-Feinfiltereinrichtung versehen ist, und andererseits über eine Überdruckleitung mit einem Überdruck erzeugenden Kompressor verbunden ist,

(d) einer am unteren Ende des Sammelbehälters angeordneten Mischeinrichtung, die eine oder mehrere Zuführungsstutzen für das Bindemittel bzw. die Bindemittelkomponenten, eine Misch- und Förderschnecke und ein Rohrleitungssystem mit einem Dreiwegehahn aufweist, wobei der Dreiwegehahn in der einen Stellung die Führung der zu mischenden Masse im Kreislauf und in der anderen Stellung den Austrag der Mischung gestattet.

Die Luft-Absaugvorrichtung ist gekennzeichnet durch

(a) eine mit auswechselbaren Filtern bestückte Filterkammer für die abzusaugende staubige, in den zu sanierenden Räumen befindliche Luft,

(b) eine hinter der Filterkammer angeordnete Luftansaugkammer mit darin befindlicher Luftansaugpumpe, die die angesaugte Luft

(c) durch eine mit auswechselbaren Absolutfiltern bestückte Luftaustrittskammer ins Frei drückt.

Weitere Ausgestaltungen des Erfindung sind in den Mebnaden des abhängigen Ansprüche dargestellt.

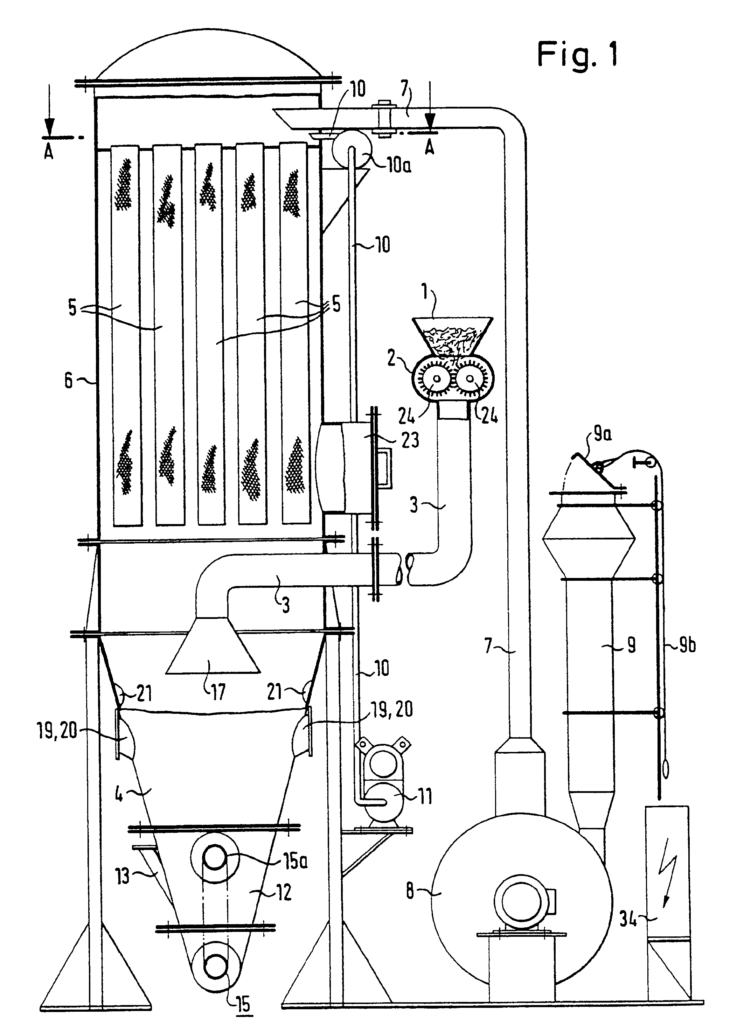

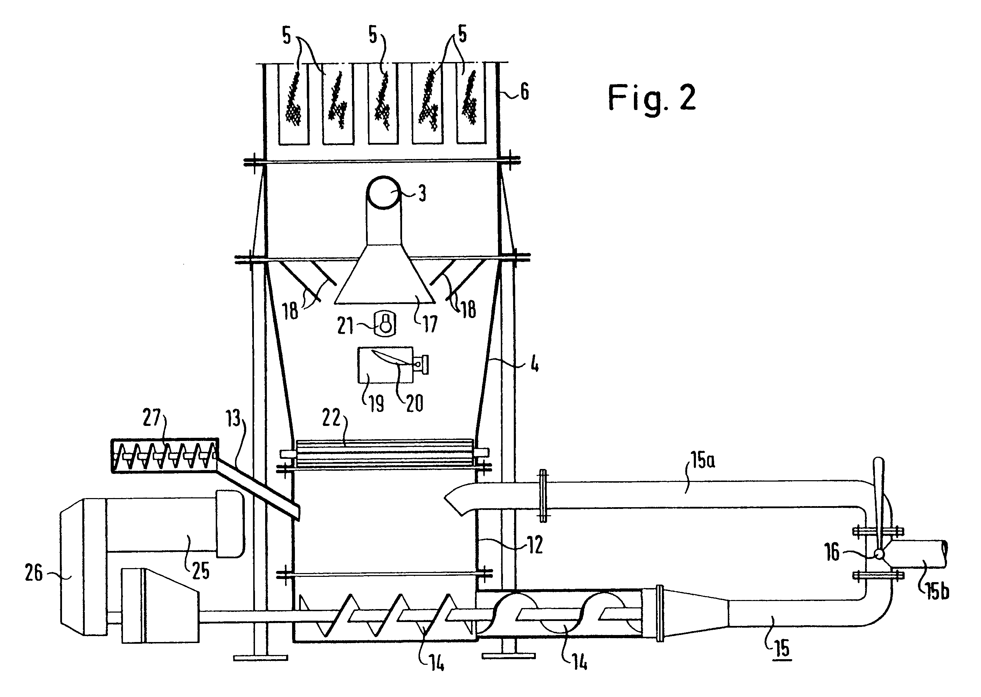

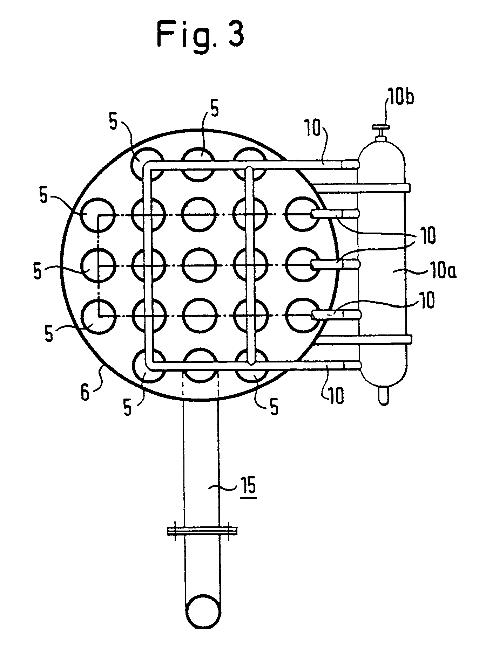

Die Erfindung wird nachfolgend anhand der Fig. 1 bis 4 weiterhin erläutert. Die in den Figuren dargestellten Ausführungsformen stellen bevorzugte Ausführungsformen dar, so daß die Erfindung nicht darauf beschränkt ist.

Die in den Figuren und in den nachfolgenden Ausführungen sowie in den Patentansprüchen verwendeten Bezugszeichen sind am Ende der Beschreibung in der "Liste der Bezugszeichen" zusammengefaßt.

Fig. 1 zeigt in schematischer Darstellung einen vertikalen Schnitt durch die Mischvorrichtung bei Betrachtung der Vorrichtung von der Vorderseite.

Fig. 2 zeigt in schematischer Darstellung einen vertikalen Schnitt durch die Mischvorrichtung bei Betrachtung der Vorrichtung von der Längsseite.

Fig. 3 zeigt einen Querschnitt entlang der Linie A - A in Fig. 1 durch die Trennplatte, in der die Schlauchfilter befestigt sind.

Fig. 4 zeigt im Schnitt die Luft-Absaugvorrichtung.

Bei der praktischen Durchführung des erfindungsgemäßen Verfahrens geht man so vor, daß man nach der Installation der Luft-Absaugvorrichtung zunächst diese in Betrieb nimmt, um von vorn herein beim Entfernen der alten Asbest-Materialien die Raumluft so sauber wie möglich zu halten. Die Filter der Luft-Absaugvorrichtung müssen so ausgelegt sein, daß einerseits der gewünschte Luftdurchsatz gewährleistet ist und daß andererseits gewährleistet ist, daß auch der sehr feine Asbeststaub mit Teilchengrößen von ca. 2 μ zurückgehalten wird.

Noch vor der Entfernung der alten Asbestmaterialien setzt man auch die andere mit Filtern bestückte Vorrichtung mit dem Saug- und Mischsystem in Betrieb. Beim Entfernen der alten Asbestmaterialien geht man dann, soweit dies möglich ist, so vor, daß die alten Asbestmaterialien beim Entfernen von ihrem Einsatzort direkt durch den Einfülltrichter 1 in die Zerkleinerungseinrichtung 2 fallen und von dort durch die Feststoff-Ansaugleitung 3 in den Sammelbehälter 4 gelangen. Der Sammelbehälter 4 ist, zumindest in seinem unteren Bereich, konisch gestaltet, wobei der Konus die Form eines Kegelstumpfes oder eines rechteckigen Pyramidenstumpfes aufweisen kann. Der Konus des Sammelbehälters 4 mündet in eine ebenfalls entsprechend konisch gestaltete Mischeinrichtung 12, wobei vorzugsweise zwischen dem Sammelbehälter 4 und der Mischeinrichtung 12 eine Verschlußeinrichtung 22, z. B. in Form von zwei oder mehreren Verschlußwalzen, die im Querschnitt wie etwas ineinandergreifende Zahnräder aussehen, angeordnet ist. Mittels dieser Verschlußeinrichtung 22 ist es möglich, den Sammelbehälter 4 zu füllen und gleichzeitig das zu mischende, in der Mischeinrichtung befindliche Gut zwecks guter Durchmischung im Kreislauf zu führen, wie dies nachfolgend noch näher erläutert wird.

Auf dem Sammelbehälter 4 befindet sich der mit Schlauchfiltereinheiten 5 bestückte Saugaufsatz 6, der über eine Luft-Ansaugleitung 7 mit der Vakuumpumpe 8 verbunden ist, mit der üblicherweise ein Unterdruck von ca. 0,35 bar (350 mm Hg) erzeugt wird. Mittels der Vakuumpumpe 8 wird das in der Zerkleinerungsvorrichtung 2 zerkleinerte Material durch die Feststoff-Ansaugleitung 3 in den Sammelbehälter 4 gesaugt. Die mit den Feststoffen eingesaugte Luft geht dann durch die Schlauchfiltereinheiten 5 und die Luft-Ansaugleitung 7 zur Vakuumpumpe 8 und verläßt die Vakuumpumpe 8 durch die gleichzeitig als Schalldämpfer wirkende, mit Absolutfiltern bestückte Abluft-Feinfiltereinrichtung 9. Auf diese Weise gelangt nur absolut saubere, von jeglichen Asbestteilchen befreite Ansaugluft ins Freie. An der Luft-Austrittsöffnung der Abluft-Feinfiltereinrichtung 9 befindet sich vorzugsweise eine mittels eines Seilzuges 9 b zu öffnende Abdeckklappe 9 a.

Wie aus Fig. 1 ersichtlich ist, ist der Saugaufsatz 6 aber nicht nur mit der Luft-Ansaugleitung 7 verbunden, sondern auch mit dem Drucktank 10 a, der Überdruckleitung 10 und dem Kompressor 11, mit dem ein Druck von ca. 8 bar erzeugt wird. Die aus dem Drucktank 10 a in den Saugaufsatz 6 bei geschlossener Ansaugleitung 7 einströmende Druckluft erfüllt eine wichtige Funktion hinsichtlich der Regenerierung der Schlauchfiltereinheiten 5. Je nach Steuerung der Druckluft läßt sich zunächst ein "Rütteleffekt" erzeugen, durch den die Hauptmenge des angesaugten Asbeststaubes von den Schlauchfiltereinheiten 5 abgeschüttelt wird. Anschließend kann man dann durch weitere Druckluftstöße die Schlauchfiltereinheiten 5 freiblasen. Bei der Druckluftregeneration der Schlauchfiltereinheiten 5 arbeitet man so, daß möglichst wenig Staub durch die Feststoff-Ansaugleitung 3 in die zu sanierenden Räume gelangt. Da sich dies jedoch nie ganz vermeiden läßt, hat es sich als vorteilhaft erwiesen, wenn man den Rand des Einfülltrichters 1 so gestaltet, daß man ohne großen Aufwand eine Filtereinheit, z. B. in Form eines Schlauches oder eines Sackes, daran befestigen kann.

Wie bereits erwähnt, befindet sich zwischen dem Sammelbehälter 4 und der Mischeinrichtung 12 vorzugsweise eine Verschlußeinrichtung 22. Diese Verschlußeinrichtung 22, die aus Zahnradwalzen oder mit Paddeln ausgestatteten Wellen bestehen kann, ermöglicht es, bei "geschlossener Stellung" über die Feststoff-Ansaugleitung 3 die Feststoffe in den Sammelbehälter 4 einzubringen, während in der Mischeinrichtung 12 die darin befindliche Feststoffcharge mit dem durch die Zuführungsstutzen 13 zugeführten Bindemittel gemischt wird, wobei man im Falle der Zugabe von Zementmörtel als Bindemittel den Zementmörtel mittels einer Zementmörtel-Zuführungsschnecke 27 durch einen Zuführungsstutzen 13 in die Mischeinrichtung 12 einbringt. Um eine homogene Durchmischung der Feststoffe mit dem Bindemittel zu erreichen, führt man das Gemisch mittels der Misch- und Förderschnecke 14 bei entsprechender Stellung des Dreiwegehahns 16 durch die Misch- und Spülleitung 15 a. Nach erfolgter homogener Mischung verläßt dann das Gemisch die Mischeinrichtung 12 bei entsprechender Umstellung des Dreiwegehahns 16 durch die Austragsleitung 15 b. Der Antrieb der Misch- und Förderschnecke 14 erfolgt über den Motor 25 und das Getriebe 26, wobei der Motor vorzugsweise elektrisch angetrieben wird.

Nach der Entleerung der Mischeinrichtung 12 versetzt man die Verschlußeinrichtung 22 in Bewegung, beispielsweise läßt man die nur etwas ineinandergreifenden Zahnradwalzen oder aber Brecherwalzen, wie sie z.B. in der Zerkleinerungsvorrichtung 12 Anwendung finden, gegenläufig rotieren, wodurch die Feststoffe aus dem Sammelbehälter 4 in die Mischeinrichtung 12 gefördert werden. Die Feststoff-Förderung kann man dabei durch Schaugläser 19, die mit im Inneren des Sammelbehälters 4 angeordneten Schauglaswischern 20 und Innenbeleuchtungseinrichtungen 21 versehen sind, beobachten. Nach Erreichen einer bestimmten Füllhöhe in der Mischeinrichtung 12, stoppt man die Feststoffzufuhr und bringt dann das Bindemittel durch den oder die Zuführungsstutzen 13 in die Mischeinrichtung 12 ein, woraufhin wiederum der Mischkreislauf in Bewegung gesetzt wird. Die in den erfindungsgemäß eingesetzten Vorrichtungen angewandten Antriebsaggregate werden vorzugsweise elektrisch betrieben und stellen entsprechende Elektromotoren dar. Die Elektrizitätszufuhr erfolgt bei der Vorrichtung mit dem Saug- und Mischsystem über den in Fig. 1 dargestellten Elektrokasten 34.

Nach dem letzten Mischkreislauf, d.h. am Ende der Arbeitsschicht, ist es notwendig, die Mischeinrichtung 12 zu säubern. Zu diesem Zweck bringt man dann durch einen der Zuführungsstutzen 13 das jeweilige Spülmittel ein und führt es zwecks gleichzeitiger Säuberung der Misch- und Förderschnecke 14 im Kreislauf durch die Misch- und Spülleitung 15a.

Um die Staubbeladung der Schlauchfiltereinheiten 5 in dem Saugaufsatz 6 zu verringern, kann es erwünscht sein, wenn man im oberen Bereich des Sammelbehälters 4 Prallbleche 18 anbringt, wobei es vorteilhaft sein kann, daß man diese derart anbringt, daß sie gegebenenfalls durch Luftdruckstöße sauber "gerüttelt" werden können. Ferner ist es in diesem Zusammenhang vorteilhaft, wenn die Feststoff-Ansaugleitung 3 an ihrem im Sammelbehälter 4 befindlichen Ende in Form eines sich öffnenden Trichters 17 ausgebildet ist.

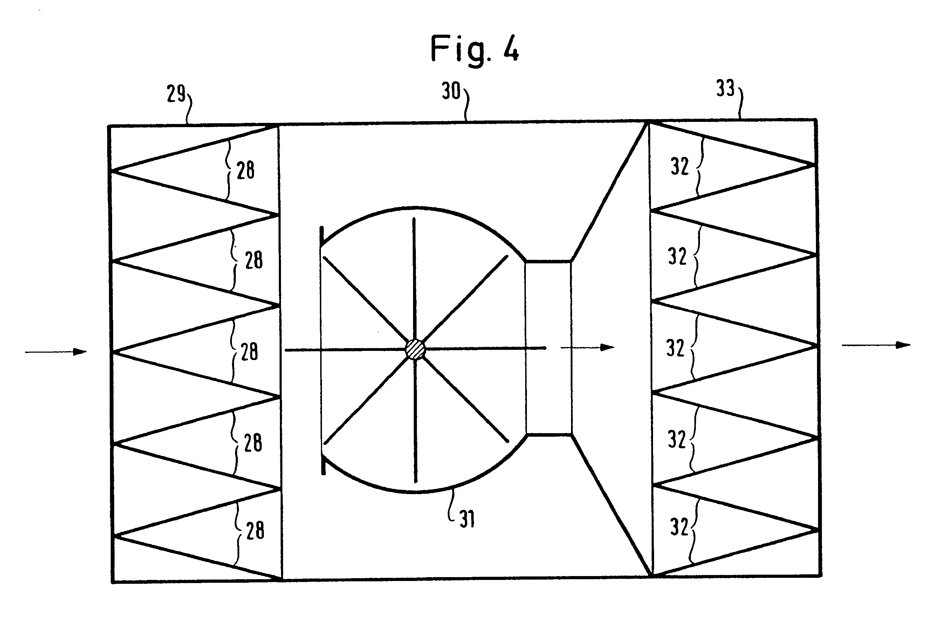

Die in Fig. 4 dargestellte Luft-Absaugvorrichtung besteht im wesentlichen aus der Hauptfilterkammer 29, der Luftansaugkammer 30 mit der darin befindlichen Luftansaugpumpe 31 und der Nachfilterkammer 33. In den beiden Filterkammern 29, 33 sind die auswechselbaren plattenförmigen Filter vorzugsweise in Zick-Zack-Bauweise angeordnet und befinden sich in entsprechend montierten U-Schienen, die ihrerseits Bestandteil entsprechender Filtergestelle sind. Die mit den Filtern bestückten Filtergestelle stellen praktisch die Filterkammern 29, 33 dar. Die auswechselbaren Filter 28 der Hauptfilterkammer 29 müssen so beschaffen sein, daß einerseits gewährleistet ist, daß selbst Asbestteilchen von 2 μ zurückgehalten werden und andererseits Luftdurchsatzmengen von 15.000 bis 35.000 m³/h erreicht werden. Das Gleiche gilt für die in der Nachfilterkammer 33 angeordneten auswechselbaren Absolutfilter. Beim Betrieb dieser Luft-Absaugvorrichtung soll dabei in den zu sanierenden Räumen ein Unterdruck von ca. 0,1 bar gegenüber Normaldruck herrschen, um sicherzustellen, daß z.B. keine Asbestfaserteilchen nach außen gelangen.

Da die erfindungsgemäß eingesetzten Filter nicht beliebig oft regeneriert werden können, kommt früher oder später der Zeitpunkt, wo auch diese Filter deponiefähig gemacht werden müssen. Zu diesem Zweck eignet sich natürlich ebenfalls die erfindungsgemäß eingesetzte Vorrichtung mit dem Saug- und Mischsystem gemäß vorliegendem Anspruch 4. Gegebenenfalls ist es dabeinotwendig, das reine Filtermaterial zunächst aus den Rahmen herauszuschneiden. Die Rahmen werden dann in der Zerkleinerungsvorrichtung 2, z.B. mittels der Brecherwalzen 24, zerkleinert. Für das Filtermaterial ist es vorteilhaft, wenn man dieses über einen Reißwolf zerkleinert, der zu diesem Zweck auf dem Einfülltrichter ohne großen Aufwand aufgeflanscht ist.

Abschließend sei bemerkt, daß das mit Bindemitteln versehene Gefahrgut, z.B. zerkleinerter Asbestmörtel vermengt mit wässrigem Zement, vorzugsweise in Würfel- oder Quaderformen eingebracht wird, die nach der Härtung entfernt werden. Die auf diese Weise hergestellten Würfel oder Quader sind besonders deponiefreundlich, da sie eine raumsparende Ablagerung gestatten. Die Quader- oder Würfelformen selbst bestehen beispielsweise aus einer üblichen Euro-Holzpalette, auf der zwei rechtwinklig gebogene, gegebenenfalls außen mit Verstärkungsrippen versehene Blechstücke stehen, die an beiden Seiten über entsprechende alternierende Umbiegungen mittels einsteckbarer Stangen nach Art von Drehscharnieren verbunden sind. Die so erhaltene form wird mit einer Folienbahn ausgekleidet, die für das in der form eingebrachte Gut einen wasserdichten Mantel bildet. In dem zu erhärtenden Material wird oben zentrisch ein oben mit einer Ringöse versehener Anker eingebracht, in den beim Verladen oder Entladen entsprechende Krankhaken eingreifen. Zwecks Entformung der Blöcke wird eine der Stangen aus den Scharnierumbiegungen herausgezogen, so daß nach dem Aufklappen der Form diese leicht entfernt werden kann. Nach der Ablagerung auf der Deponie wird die aus dem Block herausragende Ankeröse abgeschnitten, so daß auf den Blöcken eine neue Lage von Blöcken abgelagert werden kann.

Die Versteifungsrippen sind vorzugsweise diagonal angeordnet. Die Blechstücke bestehen vorzugsweise aus 6mm-starken Stahlblechen.

EP 0 315 659 B1

Liste der Bezugszeichen

| | |
|---|---|
| 1 | Einfülltrichter |
| 2 | Zerkleinerungseinrichtung |
| 3 | Feststoff-Ansaugleitung |
| 4 | Sammelbehälter |
| 5 | Schlauchfiltereinheiten |
| 6 | Saugaufsatz |
| 7 | Luft-Ansaugleitung |
| 8 | Vakuumpumpe |
| 9 | Abluft-Feinfiltereinrichtung |
| 9a | Abdeckklappe |
| 9b | Seilzug |
| 10 | Überdruckleitung |
| 10a | Drucktank |
| 10b | Überdruckventil |
| 11 | Kompressor |
| 12 | Mischeinrichtung |
| 13 | Zuführungsstutzen für das Bindemittel bzw. die Bindemittelkomponenten |
| 14 | Misch- und Förderschnecke |
| 15 | Rohrleitungssystem |
| 15a | Misch- und Spülleitung |
| 15b | Austragsleitung |
| 16 | Dreiwegehahn |
| 17 | Trichter |
| 18 | Prallbleche |
| 19 | Schaugläser |
| 20 | Schauglaswischer |
| 21 | Innenbeleuchtungseinrichtungen |
| 22 | Verschlußeinrichtung |
| 23 | Mannloch |
| 24 | Brecherwalzen |
| 25 | Motor |
| 26 | Getriebe |

6

27    Zementmörtel-Zuführungsschnecke

28    auswechselbare Filter

29    Hauptfilterkammer

30    Luftansaugkammer

31    Luftansaugpumpe

32    auswechselbare Absolutfilter

33    Nachfilterkammer

34    Elektrokasten

**Patentansprüche**

1. Verfahren zur Sanierung von Gebäuden durch umweltfreundliches Deponiefähigmachen von gesundheitsschädlichen, staubenden Feststoffen, insbesondere von sämtlichen im Baugewerbe eingeaetzten alten Isoliermaterialien, Spritzputzen und/oder anderen Beschichtungen auf Basis von Asbest-, Glas-, Stein- und-/oder anderen Mineralfasern sowie Asbestzementwaren, bei dem die staubenden Feststoffe mit Raumluft mittels Vakuum in einen Behälter gebracht werden, in welchem die Luft gefiltert und dann in die Atmosphäre entlassen wird, und die zurückbleibenden Feststoffe weiter zerkleinert, mit einem Bindemittel versehen und anschließend ausgetragen werden, dadurch gekennzeichnet, daß man

(a) die mechanisch von ihrem Einsatzort entfernten gesundheitsschädlichen, staubenden Feststoffe durch eine mit Einfülltrichter (1) versehene Zerkleinerungseinrichtung (2) in eine Saugleitung (3) einbringt, mittels der die zerkleinerten gesundheitsschädlichen, staubenden Feststoffe zu einer außerhalb des Gebäudes befindlichen Vorrichtung gesaugt und dort mit Bindemitteln gemischt werden, wobei die Ansaugluft vor dem Austritt an die Atmosphäre so gefiltert wird, daß sie die Vorrichtung frei von Schadstoffen verläßt, und

(b) die in den zu sanierenden Räumen befindlichen staubige Luft über eine mit Filtern versehen Luft-Absaugvorrichtung absaugt.

2. Verfahren nach Anspruch 1, dadurch gekennzeichnet, daß man als Bindemittel einen Zementmörtel einsetzt.

3. Verfahren nach Anspruch 1, dadurch gekennzeichnet, daß man als Bindemittel ein reaktives Kunstharz einsetzt.

4. Verfahren nach Anspruch 3, dadurch gekennzeichnet, daß man als reaktives Kunstharz ein Epoxidharz mit entsprechender Härterkomponente einsetzt.

5. Vorrichtung zur Durchführung des Verfahrens nach Anspruch 1(a), bestehend im wesentlichen aus einer Ansaugleitung, einem mit Luftfiltereinrichtungen versehenen Sammelbehälter, Förder- und Mischeinrichtungen, sowie einer Einrichtung zum Austragen der mit Bindemittel versehenen Feststoffe, dadurch gekennzeichnet, daß das von Filtern abgeschlossene Saug- und Mischsystem im wesentlichen besteht aus

(a) einer mit einem Einfülltrichter (1) und einer Zerkleinrungseinrichtung (2) versehenen Feststoff-Ansaugleitung (3),

(b) einem nach unten konisch gestalteten Sammelbehälter (4), in dem die Feststoff-Ansaugleitung (3) endet,

(c) einem mit Schlauchfiltereinheiten (5) versehenen Saugaufsatz (6), der sich auf dem Sammelbehälter (4) befindet, wobei der Saugaufsatz (6) einerseits über eine Luft-Ansaugleitung (7) mit einer Unterdruck erzeugenden Vakuumpumpe (8), die mit einer als Schalldämpfer wirkenden Abluft-Feinfiltereinrichtung (9) versehen ist, und andererseits über eine Überdruckleitung (10) mit einem Überdruck erzeugenden Kompressor (11) verbunden ist,

(d) einer am unteren Ende des Sammelbehälter (4) angeordneten Mischeinrichtung (12), die eine oder mehrere Zuführungsstutzen (13) für das Bindemittel bzw. die Bindemittelkomponenten, eine Misch- und Förderschnecke (14) und ein Rohrleitungssystem (15) mit einem Dreiwegehahn (16) aufweist, wobei der Dreiwegehahn (16) in der einen Stellung die Führung der zu mischenden Masse im Kreislauf und in der anderen Stellung den Austrag der Mischung gestattet.

6. Vorrichtung nach Anspruch 5, dadurch gekennzeichnet, daß die Feststoff-Ansaugleitung (3) an ihrem im Sammelbehälter (4) befindlichen Ende in Form eines sich öffnenden Trichters (17) ausgebildet ist.

7. Vorrichtung nach Anspruch 5 und/oder 5, dadurch gekennzeichnet, daß im oberen Bereich des Sammelbehälters (4) Prallbleche (18) angeordnet sind.

8. Vorrichtung nach einem oder mehreren der Ansprüche 5 bis 7, dadurch gekennzeichnet, daß zwischen Sammelbehälter (4) und Mischeinrichtung (12) eine Verschlußeinrichtung (22) angeordnet ist.

9. Vorrichtung nach einem oder mehreren der Ansprüche 5 bis 8, dadurch gekennzeichnet, daß der an der Mischeinrichtung (12) befindliche Zuführungsstutzen (13) mit einer Zementmörtel-Zuführungsschnecke (27) verbunden ist.

10. Vorrichtung nach einem oder mehreren der Ansprüche 5 bis 9, dadurch gekennzeichnet, daß die Zerkleinerungseinrichtung (2) aus zwei gegenläufigen Brecherwalzen (24) besteht.

11. Vorrichtung nach einem oder mehreren der Ansprüche 5 bis 8, dadurch gekennzeichnet, daß die Vorrichtung mobil und auf einem verkehrssicheren Anhänger montiert ist und die Feststoff-Ansaugleitung (3) aus einem flexiblen Schlauch besteht.

12. Vorrichtung zur Durchführung des Verfahren nach Anspruch 1(b), bestehend im wesentlichen aus einer Luftansaugeinrichtung, Filtern und einer Luftauslaßeinrichtung, die gekennzeichnet ist durch

(a) eine mit auswechselbaren Filtern (28) bestückte Haupfilterkammer (29) für die abzusaugende staubige, in den zu sanierenden Räumen befindliche Luft,

(b) eine hinter der Haupfilterkammer (29) angeordnete Luftansaugkammer (30) mit darin befindlicher Luftansaugpumpe (31), die die angesaugte Luft

(c) durch eine mit auswechselbaren Absolutfiltern (32) bestückte Nachfilterkammer (33) ins Freie drückt.

13. Vorrichtung nach Anspruch 12, dadurch gekennzeichnet, daß die Vorrichtung mobil und auf einem verkehrssicheren Anhänger montiert ist und die Luftansaugöffnung über ein entsprechend dimensioniertes Rohrsystem mit den zu sanierenden Räumen in Verbindung steht.

## Revendications

1. Procédé pour l'assainissement d'immeubles permettant, sans pollution, de rendre aptes à la mise en décharge des matières solides dégageant de la poussière et nuisibles à la santé, en particulier de tous les anciens matériaux d'isolation utilisés dans l'industrie du bâtiment, d'enduits au pistolet et/ou d'autres revêtements à base d'amiante, de verres, de pierre et/ou d'autres fibres minérales ainsi que de produits de ciments d'amiante pour lesquels les matières solides dégageant de la poussière sont placées sous vide avec l'air environnant dans un réservoir, dans lequel l'air est filtré pour être ensuite rejeté dans l'atmosphère et les matières solides restantes encore fragmentées, additionnées d'un produit liant et ensuite évacuées, caractérisé par le fait

(a) qu'on place les matières solides, dégageant de la poussière, nuisibles à la santé et évacuées mécaniquement de leur point d'utilisation dans un conduite d'aspiration (3) par l'intermédiaire d'un dispositif de fragmentation (2) équipé d'un entonnoir de remplissage (1), au moyen de laquelle conduite les matières solides fragmentées, dégageant de la poussière et nuisibles à la santé sont aspirées vers une installation située à l'extérieur de bâtiment où elles sont mélangées à des produits liants, l'air d'aspiration étant filtré avant sa sortie dans l'atmosphère de sorte qu'il ressort de l'installation exempt de matières nocives et

(b) qu'on aspire l'air poussiéreux contenu dans les pièces à assainir par l'intermédiaire d'une installation d'aspiration équipée de filtres.

2. Procédé selon la revendication 1 caractérisé en ce qu'on utilise comme produit liant un mortier de ciment.

3. Procédé selon la revendication 1 caractérisé en ce qu'on utilise comme produit liant une résine synthétique réactive.

4. Procédé selon la revendication 3 caractérisé en ce qu'on utilise comme résine synthétique réactive une résine époxy dont les composants du durcisseur sont adéquats.

5. Installation pour appliquer le procédé selon la revendication 1(a) comprenant principalement une conduite d'aspiration, un réservoir de collecte équipé de dispositifs de filtration de l'air, des équipements de transport et de malaxage ainsi qu'une installation pour l'évacuation des matières solides réunies par le produit liant, caractérisé par le fait que le système d'aspiration et de malaxage terminé par des filtres comprend principalement

(a) une conduite d'aspiration des matières solides (3) équipée d'un entonnoir de remplissae (1) et d'une installation de fragmentation (2),

(b) un réservoir de collecte (4) conique vers le bas dans lequel se termine la conduite d'aspiration des matières solides (3),

(c) un chapeau d'aspiration (6) muni d'unités de filtration à tuyaux (5), chapeau qui se trouve sur le réservoir de collecte (4), dans lequel le chapeau d'aspiration (6) est relié, d'une part, par une conduite d'aspiration d'air (7) à une pompe à vide (8) créant une sous-pression - pompe qui est équipée d'un dispositif de filtrage fin de l'air sortant (9) servant de silencieux - et, d'autre part, par une conduite de surpression (10) à un compresseur (11) produisant la surpression,

(d) un dispositif de malaxage (12) placé à l'extrémité inférieure du réservoir de collecte (4), dispositif qui présente un ou plusieurs tuyaux d'arrivée (13) pour le produit liant ou les composants du produit liant, une vis mélangeuse et une hélice transporteuse (14) et un système de tuyauterie (15) avec un robinet à trois voies (16), celui-ci permettant, dans une position, le transport circulaire de la masse à mélanger et, dans l'autre position, l'évacuation du mélange.

6. Dispositif selon la revendication 5 caractérisé en ce que l'extrémité de la conduite d'aspiration des matières solides (3) qui se trouve dans le réservoir de collecte (4) a la forme d'un entonnoir (17) s'ouvrant.

7. Dispositif selon la revendication 5 et/ou 5 caractérisé en ce que dans la zone supérieure du réservoir de collecte (4) sont placées des chicanes (18).

8. Dispositif selon une ou plusieurs des revendications 5 à 7 caractérisé en ce qu'un dispositif de fermeture (22) est placé entre le réservoir de collecte (4) et le dispositif de malaxage (12).

9. Dispositif selon une ou plusieurs des revendications 5 à 8 caractérisé en ce que le tuyau d'arrivée (13) se trouvant sur le dispositif de malaxage (12) est relié à une hélice d'arrivée du mortier de ciment (27).

10. Dispositif selon une ou plusieurs des revendications 5 à 9 caractérisé en ce que le dispositif de fragmentation (2) est composé de deux tambours broyeurs (24) tournant en sens inverse l'un de l'autre.

11. Dispositif selon une ou plusieurs des revendications 5 à 8 caractérisé en ce que le dispositif est mobile et monté sur une remorque répondant aux normes de la sécurité routière et que la conduite d'aspiration des matières solides (3) est un tuyau flexible.

12. Installation pour utiliser le procédé selon la revendication 1 (b) comprenant principalement un dispositif d'aspiration d'air, des filtres et un dispositif d'évacuation de l'air qui est caractérisé par

(a) une chambre du filtre principal (29) équipée de filtres interchangeables (28) pour l'air à aspirer, dégageant de la poussière et se trouvant dans les pièces à assainir,

(b) une chambre d'aspiration d'air (30) située derrière la chambre du filtre principal (29) dans laquelle se trouve une pompe d'aspiration d'air (31) qui aspire l'air

(c) par une chambre de filtration ultérieure (33) équipée de filtres absolus (32) interchangeables vers l'extérieur.

13. Installation selon la revendication 12 caractérisée par le fait que l'installation est mobile et montée sur une remorque répondant aux normes de la sécurité routière et que l'ouverture d'aspiration de l'air reste en relation avec les pièces à assainir par un système de tuyauterie aux dimensions adéquates.

## Claims

1. A method for the environmental improvement of buildings by the environmentally acceptable conversion of noxious, dust raising substances and more particularly of all waste insulating solid materials utilized in the building trade, sprayed wall plaster and/or other coating on the basis of asbestos, glass, stone and/or other mineral fibers, as well as asbestos cement material to be suitable for disposal in the case of which the dust raising solid materials are conveyed into a container by means of vacuum using air from the surrounding room, in which container the air is filtered and then released into the atmosphere, and the remaining solids are further comminuted, provided with a binding agent and then removed, characterized in that

(a) the noxious dust raising solids as removed from the site of application are introduced through a comminuting apparatus (2) provided with an inlet hopper (1) into a vacuum duct (3), by means of which the comminuted noxious, dust raising solids are aspirated to a device positioned outside the building where they are mixed with binding agents, the air utilized for aspiration being so filtered prior to escape into the air that it leaves the device free of noxious materials, and

(b) the dust laden air in the rooms which is to be rendered environmentally acceptable is drawn off through an air aspirating device provided with filters.

2. The method as claimed in claim 1, characterized in that cement mortar is utilized as the binding agent.

3. The method as claimed in claim 1, characterized in that a reactive synthetic resin is utilized as the binding agent.

4. The method as claimed in claim 3, characterized in that as a reactive synthetic resin an epoxy resin with suitable curing components is utilized.

5. An apparatus for performing the method in accordance with claim 1(a), consisting essentially of an aspiration duct, a collecting container provided with air filter devices, conveying and mixing devices and with a device for removal of the solids provided with binding agent, characterized in that the aspiration and mixing system terminated by filters essentially consists of

(a) a solids aspiration duct (3) provided with a filling hopper (1) and a comminuting device (2),

(b) a downwardly converging collecting container (4) in which the solids aspiration duct (43) terminates,

(c) an aspiration cap (6) provided with bag filter units (5), which is positioned on the collecting container (4), said aspiration cap (6) being connected on the one hand via an air aspiration duct (7) with a vacuum pump (8) producing a negative pressure and which is provided with a fine filter (9) for waste air and acting as a silencer, and on the other hand via a negative pressure duct (10) with a compressor (11) producing a positive pressure, and

(d) a mixing device (12) positioned at the lower end of the collecting container (4) and which has one or more supply ports (13) for the binding agent or, respectively, the components thereof, a mixing and conveying screw (14) and a piping system (15) with a three-way valve (16), the three-way valve (16) being adapted in one position to cause the material to be mixed in a closed circuit and in the other position thereof the removal of the mixture.

6. The apparatus as claimed in claim 5, characterised in that at its end located in the collecting container the solids aspiration duct (3) is in the form of a diverging funnel (17).

7. The apparatus device as claimed in claim 5 and/or claim 5, characterized in that in the upper zone of the collecting container (4) sheet metal baffles (18) are arranged.

8. The apparatus as claimed in any one or more of the preceding claims 5 through 7, characterized in that between the collecting container (4) and the mixing device (12) a shutter device (22) is arranged.

9. The apparatus as claimed in any one or more of the preceding claims 5 through 8, characterized in that the supply ports (13) placed at the mixing device (12) are provided with a cement mortar supply screw (27).

10. The apparatus as claimed in any one or more of the preceding claims 5 through 9, characterized in that the comminuting device (2) consists of two oppositely running breaker rolls (24).

11. The apparatus as claimed in any one or more of the preceding claims 5 through 8, characterized in that the apparatus is adapted to be mobile and is arranged on a road-worthy trailer and the solids aspiration duct (3) consists of a flexible hose.

12. An apparatus performing the method as claimed in claim 1(b), consisting essentially of an air aspiration device, filters and air inlet device, characterized by

(a) a main filter chamber (28) fitted with replaceable filters (28), for the dust laden air to be aspirated, which is present in the rooms to be rendered environmentally acceptable,

(b) an air aspiration chamber (30) which is placed following the main filter chamber (29) with an air aspiration pump (31) placed therein, which pumps the aspirated air

(c) through a subsequent filter chamber (33) fitted with replaceable absolute filters (32).

13. The apparatus as claimed in claim 12, characterized in that the apparatus is adapted to be mobile and is arranged on a road-worthy trailer and the solids aspiration duct (3) is connected with the rooms to be rendered environmentally acceptable via a suitably dimensioned piping system.

Fig. 1

Fig. 2

# Fig. 3

Fig. 4